# EUROPÄISCHE PATENTSCHRIFT

(11) **EP 0 648 929 B1**
(45) Veröffentlichungstag und Bekanntmachung des Hinweises auf die Patenterteilung: **07.01.1998**
(21) Anmeldenummer: 94114932.0
(22) Anmeldetag: 22.09.1994
(51) Int. Cl.: F02M 37/22, B01D 19/00

(54) **Flüssigkeitsfilter für Kraftstoff**
Liquid filter for fuel
Filtre de liquide pour carburant

(30) Priorität: 18.10.1993 DE 9315839 U
(43) Veröffentlichungstag der Anmeldung: 19.04.1995
(73) Patentinhaber: ROBERT BOSCH GMBH, 70442 Stuttgart (DE)
(72) Erfinder: Straubel, Max, Dipl.-Ing., D-70329 Stuttgart (DE); Projahn, Ulrich, Dipl.-Ing., E-28109 El Soto (Madrid) (ES); Lucas, Bernhard, Dipl.-Ing., E-28034 Madrid (ES); Casillas, Enrique, E-28017 Madrid (ES); Haas, Wolfgang, E-28019 El Soto (Madrid) (ES); Ramirez, Eduardo, E-28804 Alcala de Henares (ES)

(56) Entgegenhaltungen:
- EP-A- 0 292 446
- EP-A- 0 404 160
- EP-A- 0 547 951

## Beschreibung

### Stand der Technik

Die Erfindung geht aus von einem Flüssigkeitsfilter für Kraftstoff nach der im Oberbegriff des Anspruchs 1 naher angegebenen Gattung.

Es ist schon ein solches Flüssigkeitsfilter für Dieselkraftstoff aus der EP 0 547 951 A1 bekannt, das zur Vermeidung von Fahrverhaltensproblemen bei Diesel-Kraftfahrzeugen eine Einrichtung für dosierten Luftabbau aufweist. Dieses Flüssigkeitsfilter weist einen in einem Gehäuse angeordneten Filtereinsatz auf, der zwischen einen Einlaß und einen Auslaß geschaltet ist und der ein auf der Reinseite des Filtereinsatzes angeordnetes Tauchrohr aufweist, das sich vom Auslaß nach unten erstreckt und mit dem Filtereinsatz einen Gassammelraum bildet, in dem sich mitgeführte Luft absetzen kann. Von diesem Gassammelraum wird die sich ansammelnde Luft über eine kleine Drosselöffnung im oberen Teil des Tauchrohrs in kleinen Blasen abgesaugt, die von der Einspritzausrüstung des Kraftfahrzeugs besser verarbeitet werden können und das Fahrverhalten weniger stören. Bei diesem Flüssigkeitsfilter ist das freie Ende des Tauchrohres nach unten offen, so daß es nun vorkommen kann, daß bei ungünstigen Bedingungen immer noch größere Luftblasen vom Kraftstoffstrom über diese Öffnung zum Auslaß geschleppt werden und damit zu Störungen im Betriebsverhalten führen können. Auch ist das Flüssigkeitsfilter nur für eine Bauart mit radial durchströmtem Filtereinsatz ausgerüstet.

### Vorteile der Erfindung

Das erfindungsgemäße Flüssigkeitsfilter mit den Merkmalen des Anspruchs 1 hat demgegenüber den Vorteil, daß bei ihm durch die zusätzliche Umlenkung des in das Tauchrohr einströmenden Kraftstoffes eine verbesserte Entlüftung erreicht wird, so daß keine großvolumigen Blasen mehr in das Einspritzsystem gelangen. Gerade bei empfindlich reagierenden Einspritzsystemen von Dieselmotoren kann damit das Fahrverhalten weiter verbessert werden. Die Maßnahmen lassen sich mit einfachen und billigen Mitteln durchführen und können leicht in bereits vorhandene Filter integriert werden. Zudem eignet sich diese Lösung sowohl für axial wie auch für radial durchströmte Filtereinsätze.

Durch die in den Unteransprüchen aufgeführten Maßnahmen sind vorteilhafte Weiterbildungen und Verbesserungen des im Anspruch 1 angegebenen Flüssigkeitsfilters möglich. Eine besonders vorteilhafte Ausgestaltung ergibt sich nach Anspruch 5, wodurch bei einfacher und platzsparender Bauweise eine äußerst günstige und wirksame Umlenkung des Kraftstoffstromes erreicht wird. Weitere vorteilhafte Ausgestaltungen ergeben sich aus der Beschreibung und der Zeichnung.

### Zeichnung

Drei Ausführungsbeispiele der Erfindung sind in der Zeichnung dargestellt und in der nachfolgenden Beschreibung näher erläutert. Es zeigen Figur 1 einen teilweisen Längsschnitt durch ein erstes Flüssigkeitsfilter für Dieselkraftstoff in vereinfachter Darstellung und Figur 2 und 3 jeweils einen Längsschnitt durch ein stark vereinfacht dargestelltes, zweites bzw. drittes Flüssigkeitsfilter.

### Beschreibung der Ausführungsbeispiele

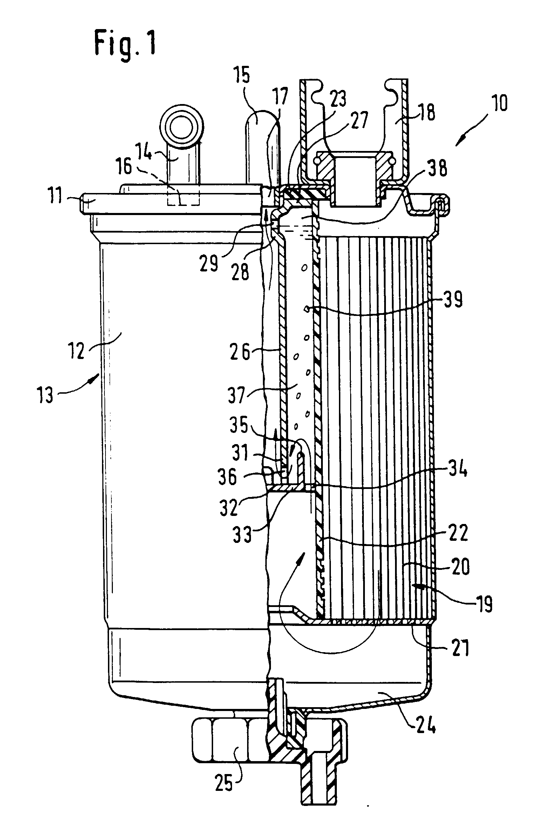

Die Figur 1 zeigt in vereinfachter Darstellung einen teilweisen Längsschnitt durch ein Flüssigkeitsfilter 10 für Dieselkraftstoff, das infolge seiner Anschlußart als Leitungsfilter bezeichnet werden kann. Bei dem Filter 10 sind in an sich bekannter Weise ein Deckel 11 und ein becherförmiges Gehäuseteil 12 in unlösbarer und dichter Weise zu einem boxförmigen Gehäuse 13 zusammengebaut, wobei ihre Ränder miteinander verbördelt sind. Im obenliegenden Deckel 11 sind ein erster und zweiter Rohrstutzen 14 bzw. 15 befestigt und bilden einen Einlaß 16 bzw. einen Auslaß 17, wobei letzterer zentral im Deckel 11 angeordnet ist. Eine im Deckel 11 angeordnete Befestigungseinrichtung 18 dient zur Aufnahme einer hier nicht näher gezeichneten Kraftstoff-Rückführeinrichtung, welche in vorliegendem Zusammenhang nicht interessiert.

Im Inneren des Gehäuses 13 ist in an sich bekannter Weise ein axial durchströmter Filtereinsatz 19 angeordnet, der hier ein Wickelelement 20 aufweist und sich unten über ein gelochtes Bodenblech 21 im Gehäuseteil 12 abstützt und dessen Mittelrohr 22 an einer Flachdichtung 23 im Deckel 11 anliegt. Im Gehäuseteil 12 ist unterhalb des Bodenbleches 21 ein Wasserspeicherraum 24 ausgebildet, der über eine Ablaßschraube 25 entleerbar ist.

Im Inneren des Mittelrohres 22 ist koaxial zu letzterem ein Tauchrohr 26 angeordnet, dessen Durchmesser etwa demjenigen des Rohrstutzens 15 entspricht. Das Tauchrohr 26 weist an seinem oberen Ende einen Bund 27 auf, mit dem es an der Flachdichtung 23 anliegt und zugleich im Mittelrohr 26 zentrisch geführt ist. Angrenzend an den Bund 27 und damit nahe am Auslaß 17 bildet das zylindrisch ausgebildete Tauchrohr 26 eine düsenartige Verengung 28, in der eine Drosselöffnung 29 für einen dosierten Luftabbau angeordnet ist. Das Tauchrohr 26 ragt mit seinem freien Ende 31 vom Auslaß 17 nach unten bis in die untere Hälfte des Filtereinsatzes 19 und bildet dort eine nach unten weisende, lochförmige Öffnung 32, welche durch ein Umlenkelement 33 abgedeckt ist.

Das Umlenkelement ist hier in Form einer Umlenkplatte 33 ausgebildet, die mit ihrem Außenumfang im Mittelrohr 22 sitzt und an ihrem Außenumfang liegende Durchbrüche 34 aufweist. Auf der Umlenkplatte 33 ist innerhalb der Durchbrüche 34 ein ringförmiger Steg 35 angeordnet, dessen Durchmesser so groß gewählt ist, daß er etwa in der Mitte zwischen dem Mittelrohr 22 und dem Tauchrohr 26 liegt. Ferner ist seine Höhe so groß gewählt, daß er die am Ende 31 im Tauchrohr 26 ausgebildeten seitlichen Durchlässe 36 mindestens geringfügig überragt. Durch die Ausbildung und Anordnung des Tauchrohrs 26 wird im Mittelrohr 22 ein Ringraum 37 begrenzt, der an seinem oberen, nahe dem Auslaß 17 liegenden Ende als Gassammelraum 38 dient.

Die Wirkungsweise des Flüssigkeitsfilters 10 wird wie folgt erläutert, wobei nur soweit auf die Funktion eingegangen wird, als zum Verständnis der Erfindung notwendig ist.

Die Einspritzausrüstung von Dieselmotoren, insbesondere bei PKW-Dieselmotoren, reagiert häufig sehr empfindlich auf mittel- bis großvolumige Luftblasen, die zusammen mit dem Kraftstoff angesaugt werden. Dagegen kann das Einspritzsystem kleine oder sehr kleine Luftblasen verarbeiten, ohne daß merkliche Änderungen im Motorverhalten auftreten. Mit Hilfe des eingebauten Tauchrohrs 26 in Verbindung mit dem Umlenkelement 33 wird nun erreicht, daß keine großvolumigen Blasen in das Einspritzsystem gelangen und zu Störungen im Fahrverhalten führen. Der zu reinigende Kraftstoff gelangt über den Einlaß 16 in das Innere des Gehäuses 13 und durchströmt axial von oben nach unten den Filtereinsatz 19 und strömt anschließend von unten her in das Mittelrohr 22 ein. Der Kraftstoff wird nun durch die Umlenkplatte 33 gezwungen, über die äußeren Durchbrüche 34 nach oben in den Ringraum 37 einzuströmen. Infolge des ringförmigen Steges 35 wird der Kraftstoff umgelenkt, strömt wieder nach unten und kann über die seitlichen Durchlässe 36 in das untere Ende 31 des Tauchrohres 26 eintreten. Infolge von Umlenkung und Auftrieb wird dabei die gelöste Luft im Ringraum 37 ausgeschieden, wobei vorhandene Luftbläschen 39 nach oben wandern und sich im Gassammelraum 38 sammeln. Von dem im oberen Teil des Mittelrohrs 22 liegenden Gassammelraum 38 wird nun über eine kleine Drosselöffnung 29, deren Durchmesser z.B. 0,3 mm bis 1 mm betragen kann, kontinuierlich Luft in kleinen Bläschen abgesaugt, da verstärkt infolge der Verengung 28, ständig ein Druckgefälle herrscht. Dabei treten nur kleine oder sehr kleine Luftblasen auf, welche keine Fahrverhaltensstörungen mehr hervorrufen. Insbesondere wird durch das Umlenkelement 33 vermieden, daß größere Luftblasen, die sich auf der Schmutzseite des Filters ansammeln können, beim Gasgeben schlagartig in das Einspritzsystem gelangen.

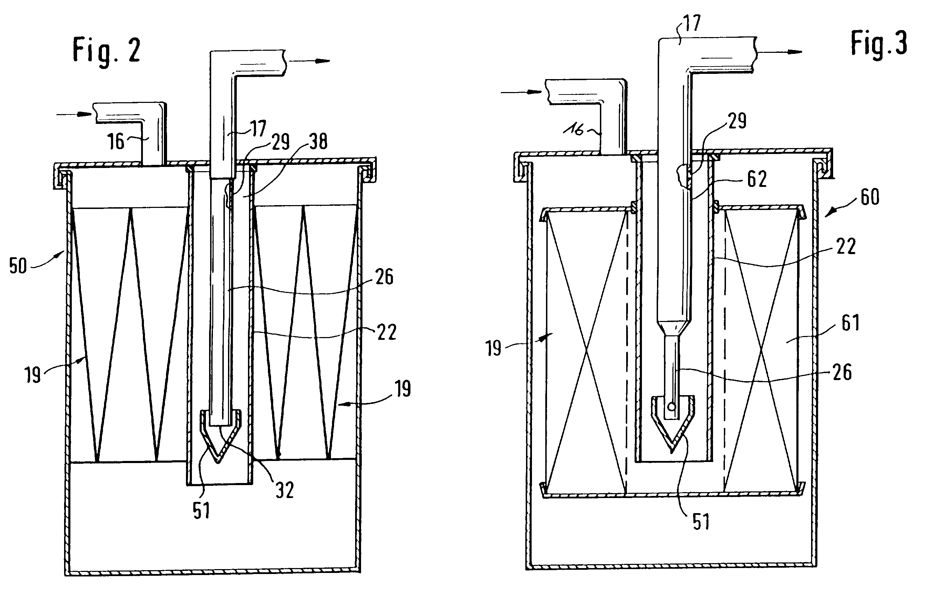

Die Figur 2 zeigt einen Längsschnitt durch ein zweites Flüssigkeitsfilter 50 in stark vereinfachter Darstellung, das sich vom Flüssigkeitsfilter 10 nach Figur 1 vor allem durch ein anderes Umlenkelement unterscheidet. Das Umlenkelement ist hier als ein im wesentlichen hutförmiges Umlenkteil 51 ausgebildet, das auf das untere, freie Ende 31 des Tauchrohres 26 aufgesteckt ist und ein ungehindertes Einschleppen von Luftbläschen durch die Strömung in das Tauchrohr 26 verhindert. Das Umlenkteil 51 bewirkt auch hier ein Umlenkung der Strömung vor ihrem Eintritt in das untere Ende des Tauchrohres 26, wobei gelöste Luft ausgeschieden wird und zum Gassammelraum 38 aufsteigt. Das Umlenkteil 51 kann einmal aus gas- und kraftstoffundurchlässigem Material hergestellt werden, so daß der gesamte Strom im Mittelrohr umgelenkt wird. Ferner ist es auch möglich, das Umlenkteil 51 aus einem luftabweisenden Sieb herzustellen, so daß zumindest ein Teil des Kraftstoffstromes ohne große Umlenkung direkt in das Tauchrohr 26 gelangen kann, wodurch der Durchflußwiderstand relativ niedrig gehalten wird und mitgeführte Luftbläschen an einem Eindringen in die Öffnung 32 des Tauchrohrs 26 gehindert werden. Ferner ist das Tauchrohr 26 hier ohne Verengung und mit durchgehend gleichem Durchmesser bis in den Luftdurchtrittsbereich ausgeführt.

Die Figur 3 zeigt ein drittes Flüssigkeitsfilter 60 im Längsschnitt und in stark vereinfachter Darstellung, das sich von dem Flüssigkeitsfilter 50 nach Figur 2 vor allem dadurch unterscheidet, daß der Filtereinsatz 19 anstelle eines Wickelelements nun einen radial durchströmten Sterneinsatz 61 aufweist, der auf das Mittelrohr 22 aufgesetzt ist. Im übrigen wird das gleiche Umlenkteil 51 wie beim zweiten Flüssigkeitsfilter 50 verwendet. Die Einrichtung für dosierten Luftabbau in Verbindung mit dem Umlenkelement 33 kann somit unabhängig von der Bauweise des Filtereinsatzes verwendet werden. Ferner wird hier ein Tauchrohr 26 verwendet, das als Diffusor ausgebildet ist, wobei die Drosselöffnung 29 in einem Bereich mit erweitertem Durchmesser 62 liegt. Die Luftabsaugung kann dadurch an die gegebenen Umstände besser angepaßt werden.

Selbstverständlich sind an den gezeigten Ausführungsformen Änderungen möglich, ohne von der Erfindung abzuweichen. Obwohl das zylindrisch ausgebildete Tauchrohr 26 besonders einfach und kostengünstig baut, kann dessen Funktion auch von einer anderen dichten Trennwand übernommen werden, die zusammen mit dem Filtereinsatz bzw. dem Mittelrohr einen Gassammelraum bildet und eine zu geordnete Drosselöffnung aufweist. Das Tauchrohr kann anstelle des kreisrunden Querschnitts selbstverständlich auch einen anderen Querschnitt aufweisen. Ebenso laßt sich die Ausbildung des Umlenkelements variieren, um eine mehr oder weniger starke Umlenkung zu erreichen. Auch läßt sich die im Zusammenhang mit Flüssigkeitsfiltern für Dieselkraftstoff dargestellte Einrichtung zum dosierten Luftabbau auch auf Benzinfilter übertragen, wo neben Luftblasen auch Gasblasen abgebaut werden müssen, die vor allem durch Verdampfen von Kraftstoff unter Temperatureinwirkung entstehen. Auch ist die aufgezeigte Einrichtung nicht auf die dargestellte Leitungsfilterbauart beschränkt, sondern läßt sich auch bei anderen Filterbauarten anwenden.

## Patentansprüche

1. Flüssigkeitsfilter (10; 50; 60) für Kraftstoff, insbesondere Dieselkraftstoff, mit einem Gehäuse (13), das neben einem Einlaß (16) für den Kraftstoff einen im Gehäuse (13) oben liegenden Auslaß (17) aufweist, und mit einem im Gehäuse (13) angeordneten Filtereinsatz (19), der sich vom Auslaß (17) nach unten erstreckt und so angeordnet ist, daß er in den zu reinigenden Kraftstoff-Strom zwischen Einlaß (16) und Auslaß (17) geschaltet ist, und mit einem vom Auslaß (17) sich nach unten erstreckenden Tauchrohr (26), das stromabwärts vom Filtereinsatz (19) auf dessen Reinseite angeordnet ist und mit dem Filtereinsatz (19) einen Gassammelraum (38) bildet, der über mindestens eine im Tauchrohr (26) angeordnete Drosselöffnung (29) zur gezielten Gasabführung mit dem Auslaß (17) in Verbindung steht und bei dem das Tauchrohr (26) unten eine Öffnung (32) aufweist, durch welche der Kraftstoff-Strom zum Auslaß (17) geführt wird, dadurch gekennzeichnet, daß an der unten liegenden Öffnung (32) des Tauchrohrs (26) ein Umlenkelement (33, 51) angeordnet ist, das den in das Tauchrohr (26) einströmenden Kraftstoff-Strom stromaufwärts von der Einströmstelle zu einer Umlenkung zwingt.

2. Flüssigkeitsfilter nach Anspruch 1, dadurch gekennzeichnet, daß das Tauchrohr (26) mit seinem vom Auslaß (17) abgewandten, die Öffnung (32) bildenden Ende (31), wenigstens in einem Bereich der unteren Hälfte des Filtereinsatzes (19) ragt und dort das Umlenkelement (33, 51) angeordnet ist.

3. Flüssigkeitsfilter nach Anspruch 1 oder 2, mit einem am unteren Ende (31) offenen Tauchrohr, dadurch gekennzeichnet, daß das Umlenkelement (33) so ausgebildet und angeordnet ist, daß es in dem zwischen Tauchrohr (26) und Mittelrohr (22) des Filtereinsatzes (19) gebildeten Ringraum (37) eine Umlenkung des Kraftstoff-Stroms um mindestens 90 Grad, insbesondere um 180 Grad, bewirkt.

4. Flüssigkeitsfilter nach einem der Ansprüche 1 bis 3, dadurch gekennzeichnet, daß der Filtereinsatz (19) als axial durchströmtes Wickelelement (20) ausgebildet ist.

5. Flüssigkeitsfilter nach einem oder mehreren der Ansprüche 1 bis 4, dadurch gekennzeichnet, daß das Umlenkelement als plattenförmiges Umlenkteil (33) ausgebildet ist, das in das Mittelrohr (22) eingesetzt ist und insbesondere eine nach unten zeigende Öffnung (32) des Tauchrohrs (26) abdeckt, und daß das Umlenkteil (33) einen in den Ringraum (37) hineinragenden, ringförmigen, im Abstand von Tauchrohr (26) und Mittelrohr (22) liegenden Steg (35) aufweist, und daß das Umlenkteil (33) außerhalb des Steges (35) liegende Durchbrüche (34) und das Ende (31) des Tauchrohrs (26) seitliche Durchlässe (36) aufweisen.

6. Flüssigkeitsfilter nach einem der Ansprüche 1 bis 4, dadurch gekennzeichnet, daß die untere Öffnung (32) im Tauchrohr (26) durch ein hutförmiges Umlenkelement (51) abgedeckt ist, das insbesondere ganz oder teilweise aus einem luftabweisenden, aber kraftstoff-durchlässigen Material bzw. Sieb besteht.

7. Flüssigkeitsfilter nach einem der Ansprüche 1 bis 6, dadurch gekennzeichnet, daß die Drosselöffnung (29) im Bereich einer Venturidüse (28) angeordnet ist, die insbesondere nahe dem Auslaß (17) liegt.

8. Flüssigkeitsfilter nach einem der Ansprüche 1 bis 6, dadurch gekennzeichnet, daß das Tauchrohr als Diffusor mit einem sich in Stromrichtung erweiternden Querschnitt (62) ausgebildet ist und die Drosselöffnung (29) im Bereich des größeren Querschnitts angeordnet ist.

## Claims

1. Liquid filter (10; 50; 60) for fuel, in particular diesel fuel, having a housing (13) which, in addition to an inlet (16) for the fuel, has an outlet (17) located at the top of the housing (13), and having a filter insert (19) which is arranged in the housing (13), extends downwards from the outlet (17) and is arranged such that it is situated, in the fuel stream which is to be cleaned, between the inlet (16) and outlet (17), and having a submerged pipe (26) which extends downwards from the outlet (17), is arranged downstream of the filter insert (19), on the clean side of the latter, and forms, with the filter insert (19), a gas-collecting space (38) which is connected to the outlet (17) via at least one throttle opening (29) arranged in the submerged pipe (26) for specific gas discharge, the submerged pipe (26) having an opening (32) at the bottom, the fuel stream being routed through said opening to the outlet (17), characterized in that a deflection element (33, 51) is arranged at the bottom opening (32) of the submerged pipe (26) and causes the fuel stream flowing into the submerged pipe (26) to be deflected upstream of the flow-in location.

2. Liquid filter according to Claim 1, characterized in that, by means of its end (31) which is remote from the outlet (17) and forms the opening (32), the submerged pipe (26) projects at least into an area of the bottom half of the filter insert (19), and the deflection element (33, 51) is arranged there.

3. Liquid filter according to Claim 1 or 2, having a submerged pipe which is open at the bottom end (31), characterized in that the deflection element (33) is designed and arranged such that, in the annular space (37) formed between the submerged pipe (26) and central pipe (22) of the filter insert (19), it causes a deflection of the fuel stream through at least 90°, in particular through 180°.

4. Liquid filter according to one of Claims 1 to 3, characterized in that the filter insert (19) is designed as a wound element (20) through which flow takes place axially.

5. Liquid filter according to one or more of Claims 1 to 4, characterized in that the deflection element is designed as a plate-like deflection part (33) which is introduced into the central pipe (22) and covers, in particular, a downwardly oriented opening (32) of the submerged pipe (26), and in that the deflection part (33) has an annular web (35) which projects into the annular space (37) and is located at a distance from the submerged pipe (26) and central pipe (22), and in that the deflection part (33) has through-openings (34) located outside the web (35), and the end (31) of the submerged pipe (26) has lateral through-passages (36).

6. Liquid filter according to one of Claims 1 to 4, characterized in that the bottom opening (32) in the submerged pipe (26) is covered by a hat-shaped deflection element (51) which comprises in particular, wholly or partially, an air-repellent, but fuel-permeable, material or screen.

7. Liquid filter according to one of Claims 1 to 6, characterized in that the throttle opening (29) is arranged in the region of a venturi nozzle (28) which is located, in particular, in the vicinity of the outlet (17).

8. Liquid filter according to one of Claims 1 to 6, characterized in that the submerged pipe is designed as a diffuser with a cross-section (62) which widens in the direction of flow, and the throttle opening (29) is arranged in the region of the larger cross-section.

## Revendications

1. Filtre de liquide (10, 50, 60)pour carburant, en particulier pour carburant pour moteur Diesel, avec un boîtier (13) qui, en plus d'une entrée (16) pour le carburant, présente une sortie (17) qui se trouve en haut dans le boîtier (13), et avec une cartouche de filtre (19) disposée dans le boîtier (13), qui s'étend à partir de la sortie (17) vers le bas et est disposée de telle façon qu'elle soit montée entre l'entrée (16) et la sortie (17) dans le courant du carburant à purifier, et avec un tube plongeur (26) qui s'étend à partir de la sortie (17) vers le bas, qui est disposé en aval de la cartouche de filtre (19) sur son côté propre, et qui forme avec la cartouche de filtre (19) un espace collecteur pour de gaz (38) qui est en liaison avec la sortie (17) par l'intermédiaire d'au moins un orifice d'étranglement (29), disposé dans le tube plongeur (26) servant à l'évacuation appropriée des gaz et dans lequel le tube plongeur (26) présente, en bas, un orifice (32) à travers lequel on fait passer le carburant vers la sortie (17),
caractérisé en ce que
sur l'orifice (32), qui se trouve en bas, du tube plongeur (26), est disposé un élément déflecteur (33, 51) qui contraint l'écoulement du carburant entrent dans le tube plongeur (26), à faire une déviation en amont du point d'entrée.

2. Filtre de liquide selon la revendication 1,
caractérisé en ce que
• le tube plongeur (26) pénètre par son extrémité (31), formant l'orifice (32), située à l'opposé de la sortie (17), dans une zone de la moitié inférieure de la cartouche de filtre (19), et
• l'élément déflecteur (33, 51) est disposé à cet endroit.

3. Filtre de liquide selon la revendication 1 ou 2, avec un tube plongeur ouvert à l'extrémité inférieure (31),
caractérisé en ce que
l'élément déflecteur (33) est constitué et disposé d'une manière telle qu'il provoque dans l'espace annulaire (37) formé entre le tube plongeur (26) et le tube central (22) de la cartouche de filtre (19), une déviation de l'écoulement du carburant d'au moins 90 degrés, en particulier de 180 degrés.

4. Filtre de liquide selon l'une des revendications 1 à 3,
caractérisé en ce que
la cartouche de filtre (19) est constituée sous la forme d'un élément enroulé (20), parcouru axialement par l'écoulement.

5. Filtre de liquide selon l'une ou plusieurs des revendications 1 à 4,
caractérisé en ce que
• l'élément déflecteur est constitué sous la forme d'une pièce déflectrice en forme de plaque (33), qui est insérée dans le tube central (22) et recouvre en particulier une ouverture orientée vers le bas (32) du tube plongeur (26), et
• la pièce déflectrice (33) présente une nervure (35), qui se trouve à une certaine distance du tube plongeur (26) et du tube central (22), de forme annulaire, pénétrant dans l'espace annulaire (37), et
• la pièce déflectrice (33) présente des ajours (34) de passage, qui se trouvent en dehors de la nervure (35) et l'extrémité (31) du tube plongeur (26) présente des ajours latéraux de passage (36).

6. Filtre de liquide selon l'une des revendications 1 à 4,
caractérisé en ce que
l'orifice inférieur (32) dans le tube plongeur (26) est recouvert par un élément déflecteur (51) en forme de chapeau, qui consiste en particulier, en totalité ou en partie, en une matière ou un tamis qui ne laisse pas passer l'air, mais laisse passer le carburant.

7. Filtre de liquide selon l'une des revendications 1 à 6,
caractérisé en ce que
l'orifice d'étranglement (29) est disposé dans la zone d'une buse en forme de Venturi (28) qui se trouve en particulier à proximité de la sortie (17).

8. Filtre de liquide selon l'une des revendications 1 à 6,
caractérisé en ce que
• le tube plongeur est constitué sous la forme d'un diffuseur avec une section transversale (62) qui va en s'élargissant dans le sens de l'écoulement, et
• l'orifice d'étranglement (29) est disposé dans la zone de la plus grande section transversale.
